# EUROPÄISCHE PATENTSCHRIFT

(11) **EP 2 604 766 B1**
(45) Veröffentlichungstag und Bekanntmachung des Hinweises auf die Patenterteilung: **10.08.2016**
(21) Anmeldenummer: 11192990.7
(22) Anmeldetag: 12.12.2011
(51) Int. Cl.: B29D 11/00, B28B 23/00, E04C 1/42, E04C 2/04, E04C 2/54

(54) **Verfahren zur Herstellung eines lichtdurchlässigen Verbundkörpers**
Method for manufacture of a light-transmissive composite element
Procédé de fabrication d'un corps composite translucide

(43) Veröffentlichungstag der Anmeldung: 19.06.2013
(73) Patentinhaber: LCT GesmbH Light & Concrete Technology, 8181 St. Ruprecht an der Raab (AT)
(72) Erfinder: Fischer, Oliver, 6850 Dornbirn (AT)
(74) Vertreter: 2s | ip Schramm Schneider Patentanwälte Rechtsanwälte

(56) Entgegenhaltungen:
- EP-A1- 2 565 339
- WO-A2-2006/070214
- WO-A2-2009/007765
- CH-A- 362 202
- DE-A1-102007 031 935
- DE-B- 1 107 579
- FR-A1- 2 932 206
- JP-A- 1 219 251
- NL-A- 7 514 727
- US-A1- 2007 251 166

## Beschreibung

Die Erfindung betrifft ein Verfahren zur Herstellung eines lichtdurchlässigen Verbundkörpers.

### Hintergrund der Erfindung und Stand der Technik

Ein lichtdurchlässiger Verbundkörper und ein Verfahren zur Herstellung eines lichtdurchlässigen Verbundkörpers sind aus der EP 1 970 179 A2 bekannt. Der lichtdurchlässige Verbundkörper wird dadurch hergestellt, dass zunächst biegesteif ausgebildete Lichtleitstäbe durch Bohrungen eines Isolierkörpers hindurchgesteckt werden, sodass sie mit ihren Enden aus den einander gegenüberliegenden Flächen des Isolierkörpers herausragen.

Der so hergestellte Grundkörper wird dann in eine Schalung eingetaucht, in welcher bereits eine aushärtbare Vergussmasse vorhanden ist, welche als Trageschicht dient.

In einem weiteren Schritt wird auf der Oberseite des Isolierkörpers eine weitere Schicht der aushärtbaren Vergussmasse aufgegossen, sodass sich damit ein an beiden Seiten mit einer Tragschicht abgeschlossener Mehrschicht-Verbundkörper ergibt. Nach dem Herausnehmen des so hergestellten Mehrschicht-Verbundkörpers aus der Schalung ist es notwendig, die einander gegenüberliegenden Stirnseiten des Mehrschicht-Verbundkörpers zu beschleifen, um die Enden der Lichtleitstäbe freizulegen.

Dieses Herstellungsverfahren ist relativ aufwendig, weil zunächst die Lichtleitstäbe durch Bohrungen eines Isolierkörpers hindurchgesteckt werden müssen, bevor die Lichtleitstäbe zusammen mit dem Isolierkörper zum Ausgießen in eine Schalung gegeben werden können. Das anschließende Beschleifen der beiden einander gegenüberliegenden Stirnseiten des Mehrschicht-Verbundkörpers erhöht den Arbeitsaufwand bei der Herstellung eines solchen Verbundkörper erheblich.

Aus der DE 10 2007 031 935 A1 ist ein Bauteil aus einer aushärtbaren Gussmasse bekannt, wobei in die Gussmasse Licht leitende Elemente eingegossen sind. Die Licht leitende Elemente sind als weitgehend formstabile Körper ausgebildet, die zumindest beim Eingießen an einer Matrix angeordnet sind.

Aus der WO 2009/007765 A2 ist ein transluzenten Bauwerkskörper mit einer ersten und einer zweiten Begrenzungsfläche bekannt. Zwischen den beiden Begrenzungsflächen sind Licht leitende Elemente angeordnet, die an einer Halteplatte angeordnet sind, wobei die Halteplatte ebenfalls zwischen den beiden Begrenzungsflächen angeordnet ist. Die Licht leitenden Elemente sind von einem Gussmaterial, z.B. Beton umgeben.

Aus der WO 2006/070214 A2 ist ein dreidimensionaler Körper bekannt, der ein nicht-transparentes, festes Material umfasst. In dem nicht-transparenten Material sind Elemente aus einem transparenten Material angeordnet, wobei die Oberfläche des dreidimensionalen Körpers teilweise von den Elementen aus dem transparenten Material gebildet wird.

Aus der JP 1 219251 A ist ein Körper aus Beton bekannt, der zumindest teilweise Licht durchlässig ausgestaltet ist. Hierzu sind in dem Körper Aussparungen bzw. Durchbrüche vorgesehen, die von einer Rückseite des Körpers bis zu einer Vorderseite des Körpers reichen. In diese Aussparungen bzw. Durchbrüche sind Lichtleitelemente angeordnet, sodass Licht von Vorderseite des Körpers bis an die Rückseite gelangen kann.

Aus der FR 2 932 206 A1 ist ein Verfahren zur Herstellung eines Licht durchlässigen Verbundkörpers bekannt. Zwischen zwei Platten wird ein transparentes Harz als Lichtleitkörper angeordnet. In die Platten werden an zwei gegenüberliegenden Seiten Aussparungen vorgesehen, sodass an einer Aussparung Licht eintreten und an der gegenüberliegenden Aussparung das Licht wieder austreten kann.

Ein Verfahren gemäß des Oberbegriffs des Anspruchs 1 wird in der US 2007/251166 A1 beschrieben. Darüber hinaus gehört die Entgegenhaltung EP 2 565 339 A1 zum Stand der Technik nach Artikel 54(3) EPÜ.

### Aufgabe der Erfindung

Der Erfindung liegt daher die Aufgabe zugrunde, ein Verfahren zur Herstellung eines lichtdurchlässigen Verbundkörpers bereitzustellen, welches eine wesentlich einfachere und kostengünstigere Herstellung eines lichtdurchlässigen Verbundkörpers erlaubt.

### Erfindungsgemäße Lösung

Diese Aufgabe wird erfindungsgemäß durch ein Verfahren zur Herstellung eines lichtdurchlässigen Verbundkörpers nach dem unabhängigen Anspruch gelöst. Vorteilhafte Ausgestaltungen und Weiterbildungen der Erfindung sind in den abhangigen Ansprüchen angegeben.

Bereitgestellt wird demnach ein Verfahren zur Herstellung eines lichtdurchlässigen Verbundkörpers, wobei der Verbundkörper zumindest einen Lichtleitkörper umfasst, wobei die Lichtleitkörper jeweils eine Anzahl von Lichtleitsegmenten aufweisen und den Verbundkörper lichtdurchlässig ausbilden, und wobei das Verfahren zumindest folgende Schritte umfasst:
- Anordnen zumindest eines Lichtleitkörpers zwischen zumindest einer ersten Abdeckplatte und einer zweiten Abdeckplatte, wobei die Abdeckplatten zusammen mit den Lichtleitkörpern ein Sandwichelement bilden, und wobei
   - die Abdeckplatten zumindest an der dem Lichtleitkörper zugewandten Seite Aussparungen oder Durchbrüche aufweisen, in welche die Lichtleitsegmente zumindest teilweise eingreifen, und
   - die Abdeckplatten formbündig auf den Lichteintrittsflächen und/oder auf den Lichtaustrittsflächen aufliegen, oder auf Schultern aufliegen, welche randseitig an den Lichtleitsegmenten ausgebildet sind, und
- Auffüllen eines zwischen den Abdeckplatten ausgebildeten Hohlraumes mit einem Füllmaterial oder Herstellen eines Vakuums in dem Hohlraum.

In die Aussparungen oder Durchbrüche greifen Zapfen ein, welche an den Lichteintrittsflächen und/oder an den Lichtaustrittsflächen zumindest einiger Lichtleitsegmente angeordnet sind

Das Sandwichelement wird in einem Schalungsraum einer zumindest oben offenen Schalung angeordnet, wobei der Schalungsraum mit dem Füllmaterial aufgefüllt wird, und wobei das Füllmaterial zumindest eines aus aushärtbare Vergussmasse umfasst.

Zwei Seitenwandungen der Schalung können durch die beiden Abdeckplatten gebildet werden.

Nach dem Auffüllen mit dem Füllmaterial werden die Abdeckplatten entfernt, wobei nach dem Entfernen der Abdeckplatten die überstehenden Zapfen von dem Verbundkörper entfernt werden.

Mehrere Sandwichelemente können in dem Schalungsraum angeordnet werden, wobei die erste Abdeckplatte des einen Sandwichelements durch die zweite Abdeckplatte des anderen Sandwichelements gebildet wird.

Das Sandwichelement oder die mehreren Sandwichelemente können verpresst werden, bevor sie in dem Schalungsraum angeordnet werden.

Die Abdeckplatten können vor dem Ausgießen des Schalungsraumes mit einem Trennmittel vorbehandelt werden.

Zwischen den Abdeckplatten des Sandwichelements, und vorzugsweise zwischen den Lichtleitkörpern, kann eine Armierung angeordnet werden.

Die Schalung, welche unten offen ist, kann auf einem Untergrund angeordnet werden, wobei das Sandwichelement derart in dem Schalungsraum der Schalung angeordnet wird, dass an dem Untergrund hervorstehende Verbindungsstäbe zwischen die Abdeckplatten des Sandwichelements hineinragen.

Die Lichtleitsegmente bestehen vorzugsweise aus PMMA, Glas oder sonstigen lichtleitenden Materialien.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
Fig. 1 einen erfindungsgemäßen Lichtleitkörper in einer perspektivischen Ansicht;
Fig. 2 drei Abdeckplatten, wobei zwischen jeweils zwei Abdeckplatten ein erfindungsgemäßer Lichtleitkörper angeordnet ist;
Fig. 3 eine sandwichförmige Anordnung von Abdeckplatten und Lichtleitkörpern in einer Schalung;
Fig. 4 eine Platte aus lichtleitendem bzw. lichtdurchlässigem Material, aus welcher eine Anzahl von Lichtleitkörpern herstellbar ist;
Fig. 5a ein erfindungsgemäßer Verbundkörper in einer perspektivischen Ansicht;
Fig. 5b ein weiteres Beispiel eines erfindungsgemäßen Verbundkörpers in einer Ansicht von vorne;
Fig. 6a - 6f verschiedene Ausführungsformen eines erfindungsgemäßen Lichtleitkörpers;
Fig. 7 einen auf einem Untergrund angeordneten erfindungsgemäßen Verbundkörper, welcher mit Verbindungsstäben mit dem Untergrund verbunden ist in einer Ansicht von vorne und in einer Schnittansicht;
Fig. 8 eine alternative Ausgestaltung eines erfindungsgemäßen Verbundkörper; und
Fig. 9 einen erfindungsgemäßen Lichtleitkörper, an welchem photovoltaische Zellen angeordnet sind.

### Detaillierte Beschreibung der Erfindung

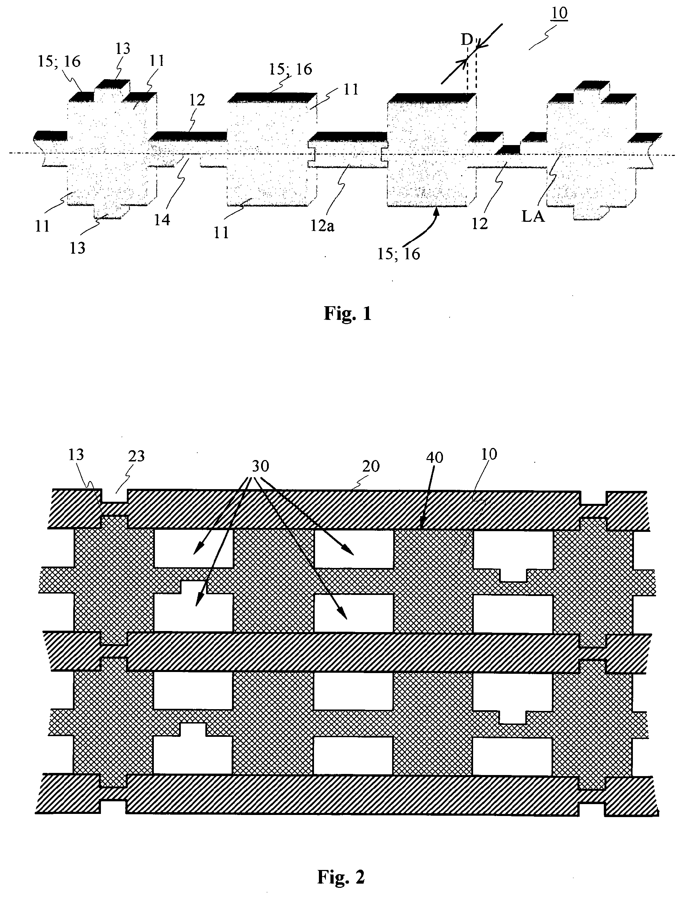

**Fig.** 1 zeigt einen Lichtleitkörper 10, welcher angepasst ist, einen erfindungsgemäßen lichtdurchlässigen Verbundkörper herzustellen.

Der Lichtleitkörper 10 umfasst eine Anzahl von Lichtleitsegmenten 11. Jedes der Lichtleitsegmente 11 weist eine Lichteintrittsfläche 15 und eine Lichtaustrittsfläche 16 auf. Die Lichtleitsegmente 11 sind in der in Fig. 1 gezeigten Ausführungsform eines erfindungsgemäßen Lichtleitkörpers im Wesentlichen quaderförmig ausgestaltet, wobei zwei gegenüberliegende Seitenflächen die Lichteintritts- bzw. Lichtaustrittsflächen 15, 16 bilden. Die Lichteintrittsfläche 15 und die Lichtaustrittsfläche 16 sind im Wesentlichen parallel zueinander angeordnet. Ferner sind die Lichteintrittsflächen 15 und die Lichtaustrittsflächen 16 der Lichtleitsegmente 11 im Wesentlichen parallel zur Längsachse LA des Lichtleitkörpers 10 angeordnet.

Die Lichtleitsegmente 11 sind über Verbindungsstege bzw. Verbindungselemente 12 miteinander verbunden, wobei die Verbindungselemente 12 jeweils an einer Seitenfläche zwischen der Lichteintrittsfläche 15 und der Lichtaustrittsfläche 16 anliegen.

Der gesamte Lichtleitkörper 10, d.h., die Lichtleitsegmente 11 und die Verbindungssegmente 12, kann einteilig oder mehrteilig ausgestaltet sein. Bei einer mehrteiligen Ausgestaltung des Lichtleitkörpers 10 können mehrere Lichtleitkörpersegmente über lösbare Verbindungssegmente 12a miteinander verbunden werden. In dem in Fig. 1 gezeigten Beispiel eines erfindungsgemäßen Lichtleitkörpers bilden die beiden linken mit einem Verbindungselement 12 verbundenen Lichtleitsegmente 11 ein erstes Lichtleitkörpersegment und die beiden rechten mit einem Verbindungssegment 12 verbundenen Lichtleitsegmente 11 ein zweites Lichtleitkörpersegment, wobei die beiden Lichtleitkörpersegmente über ein Verbindungssegment 12a miteinander verbunden sind. Die Verbindung über das Verbindungssegment 12a kann als Steckverbindung ausgestaltet sein. Damit können besonders lange Lichtleitkörper 10 hergestellt werden.

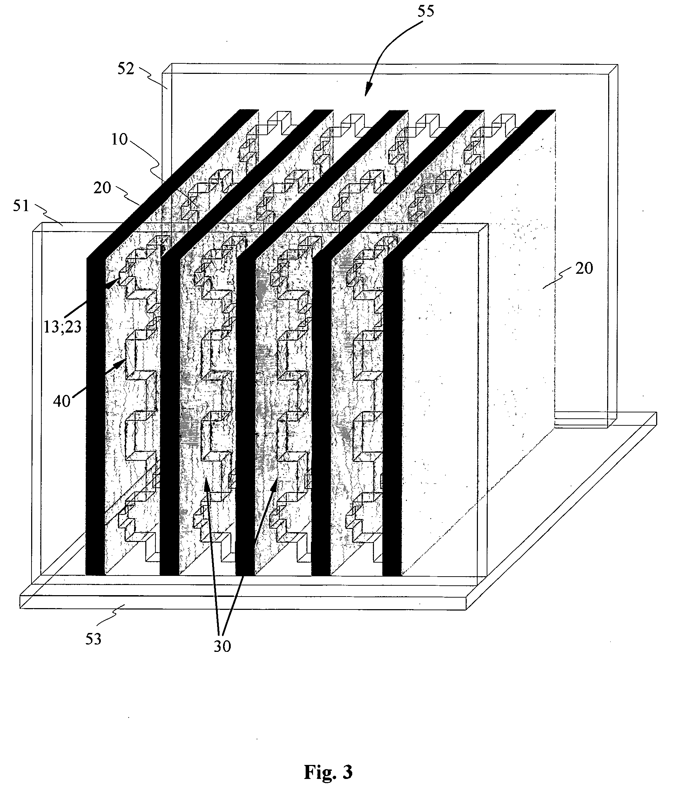

Die Lichteintrittsflächen 15 und die Lichtaustrittsflächen 16 der Lichtleitsegmente 11 weisen jeweils den gleichen Abstand zur Längsachse LA des Lichtleitkörpers 10 auf. Weil alle Lichteintrittsflächen und Lichtaustrittsflächen den gleichen Abstand zur Längsachse LA des Lichtleitkörpers 10 aufweisen und weil die Lichteintrittsflächen und die Lichtaustrittsflächen parallel zueinander liegen und im Wesentlichen parallel zur Längsachse LA angeordnet sind, liegen sämtliche Lichteintrittsflächen 15 und sämtliche Lichtaustrittsflächen 16 jeweils auf einer gedachten Ebene, was bei der Herstellung eines lichtdurchlässigen Verbundkörpers wesentliche Vorteile mit sich bringt, wie mit Bezug auf Fig. 2 und Fig. 3 näher beschrieben wird.

Die Lichtleitsegmente 11 weisen ein lichtleitendes bzw. lichtdurchlässiges Material, vorzugsweise Polymethylmethacrylat (PMMA), Glas oder ein sonstiges lichtleitendes bzw. lichtdurchlässiges Material auf. Die Verbindungssegmente 12 bzw. 12a weisen ebenfalls ein lichtleitendes bzw. lichtdurchlässiges Material auf. Bei der mehrteiligen Ausgestaltung des Lichtleitkörpers können die Verbindungssegmente 12a auch ein nicht-lichtleitendes bzw. nicht-lichtdurchlässiges Material aufweisen. Bei der einteiligen Ausgestaltung des Lichtleitkörpers 10 ist es vorteilhaft, wenn sowohl die Lichtleitsegmente 11 als auch die Verbindungssegmente 12 das gleiche lichtleitende Material aufweisen.

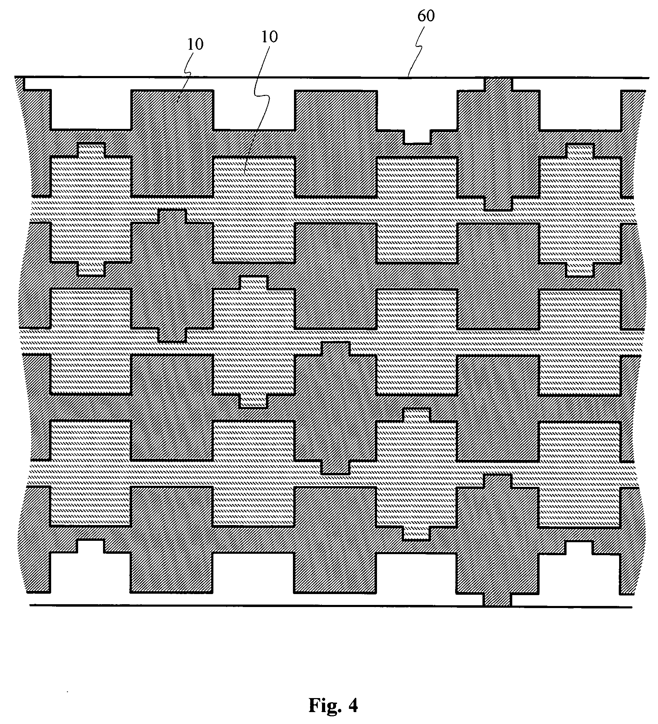

Die Lichtleitsegmente 11 und die Verbindungssegmente 12 weisen jeweils die gleiche Tiefe bzw. die gleiche Dicke D auf, was bei der Herstellung eines Lichtleitkörpers von Vorteil ist, weil der gesamte Lichtleitkörper aus einer lichtdurchlässigen bzw. lichtleitenden Platte hergestellt werden kann, wie mit Bezug auf Fig. 4 näher beschrieben wird.

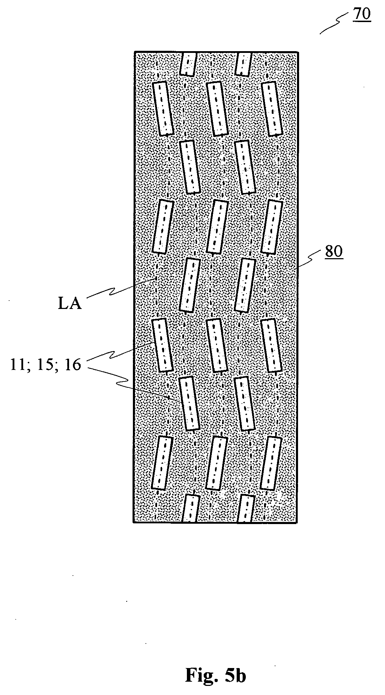

Der Lichtleitkörper 10 kann biegsam ausgestaltet sein, was zusätzliche Gestaltungsmöglichkeiten bei der Herstellung eines lichtdurchlässigen Verbundkörpers mit sich bringt, wie beispielsweise in Fig. 5b gezeigt.

An einigen der Lichtleitsegmente 11 können an den Lichtaustrittsflächen 16 und an den Lichteintrittsflächen 15 überstehende Zapfen 13 vorgesehen sein. Die Zapfen 13 greifen in Aussparungen einer Abdeckplatte ein, sodass eine stabile Anordnung eines Lichtleitkörpers 10 zwischen zwei Abdeckplatten während der Herstellung eines lichtdurchlässigen Verbundkörpers gewährleistet ist.

Das Profil des in Fig. 1 gezeigten Lichtleitkörpers 10 weist eine punktsymmetrische Form auf, was hinsichtlich der Herstellung von Lichtleitkörpern von Vorteil ist, weil der Verschnitt minimiert wird. Demzufolge weisen einige der Verbindungssegmente 12 auch eine Aussparung 14 auf, welche mit den Zapfen 13 an den Lichtleitsegmenten 14 eines weiteren Lichtleitkörpers korrespondieren. Selbstverständlich muss das Profil eines Lichtleitkörpers nicht notwendigerweise eine punktsymmetrische Form aufweisen und die Verbindungssegmente 12 müssen ebenfalls keine Aussparung 14 aufweisen.

**Fig.** 2 zeigt drei Abdeckplatten 20, wobei zwischen jeweils zwei Abdeckplatten ein erfindungsgemäßer Lichtleitkörper 10 angeordnet ist.

Die Abdeckplatten 20 weisen Aussparungen 23 auf, welche mit den Zapfen 13 der zwischen den Abdeckplatten 20 angeordneten Lichtleitsegmente korrespondieren. Die Zapfen 13 der Lichtleitsegmente 11 greifen in die Aussparungen 23 der Abdeckplatten 20 ein, sodass die Lichtleitkörper 10 stabil zwischen den Abdeckplatten 20 angeordnet sind.

Die den Lichtleitkörpern 10 zugewandten Seiten der Abdeckplatten 20 liegen formbündig 40 auf den Lichteintrittsflächen 15 bzw. auf den Lichtaustrittsflächen 16 der Lichtleitsegmente auf. Damit wird gewährleistet, dass beim Ausfüllen der Hohlräume 30 zwischen den Abdeckplatten 20 keine Vergussmasse an die Lichteintrittsflächen 15 bzw. an die Lichtaustrittsflächen 16 gelangen kann. Nach dem Anordnen der Lichtleitkörper 10 zwischen den Abdeckplatten 20 wird die so gebildete Struktur mit Hilfe von Spannmittel, etwa Schraubzwingen, Hebelzwingen oder Korpuszwingen, verpresst, sodass eine noch bessere formbündige Verbindung 40 zwischen den Abdeckplatten 20 und den Lichteintrittsflächen 15 bzw. den Lichtaustrittsflächen 16 hergestellt wird.

Weil aufgrund der formbündigen Verbindung zwischen den Abdeckplatten und den Lichteintritts- bzw. Lichtaustrittsflächen verhindert, dass die Vergussmasse an die Lichteintritts- bzw. Lichtaustrittsflächen gelangen kann, wird einerseits vermieden, dass ein so hergestellter lichtdurchlässiger Verbundkörper zusätzlich geschliffen bzw. poliert werden muss und andererseits wird erreicht, dass die Lichteintrittsflächen und die Lichtaustrittsflächen flächenbündig mit der Oberfläche der Vergussmasse sind.

Die Abdeckplatten 20 können aus Holz, Metall oder einem anderen stabilen Material gefertigt sein.

In Fig. 2 sind drei Abdeckplatten mit jeweils einem Lichtleitkörper zwischen zwei Abdeckplatten gezeigt. Selbstverständlich können auch mehr als drei Abdeckplatten vorgesehen sein, wobei zwischen jeweils zwei Abdeckplatten ein Lichtleitkörper 10 angeordnet ist. Auch ist es möglich lediglich zwei Abdeckplatten mit einem dazwischen angeordneten Lichtleitkörper zu verwenden. Ebenfalls können mehrere Lichtleitkörper zwischen zwei Abdeckplatten 20 beabstandet zueinander angeordnet werden. Das Verfahren zur Herstellung eines lichtdurchlässigen Verbundkörpers wird im Folgenden mit Bezug auf Fig. 3 näher beschrieben.

**Fig. 3** zeigt fünf Abdeckplatten 20, wobei jeweils drei zueinander beabstandete Lichtleitkörper 10 zwischen zwei Abdeckplatten 20 angeordnet sind und wobei die Abdeckplatten und die Lichtleitkörper in einer Schalung angeordnet sind.

Für die Herstellung eines erfindungsgemäßen lichtdurchlässigen Verbundkörpers werden in dem Beispiel nach Fig. 3 zunächst drei Lichtleitkörper 10 zwischen zwei Abdeckplatten angeordnet, wie mit Bezug auf Fig. 2 beschrieben. Anschließend werden an der Oberseite einer der beiden Abdeckplatten weitere drei Lichtleitkörper und auf diesen drei Lichtleitkörpern wiederum eine weitere Abdeckplatte 20 angeordnet. Dieses Verfahren wird fortgeführt bis fünf Abdeckplatten mit jeweils drei zwischen den Abdeckplatten angeordneten Lichtleitkörpern übereinander gestapelt sind. Der daraus resultierende Stapel wird mittels Klemmen bzw. Zwingen verpresst, sodass ein in sich stabiler Stapel entsteht, welcher in eine Schalung gestellt werden kann.

Bei dem in Fig. 3 gezeigten Beispiel weist die Schalung eine vorderseitige Schalungsplatte 51, eine rückseitige Schaltungsplatte 52 und eine bodenseitige Schalungsplatte 53 auf. Der verpresste Stapel wird so in der Schalung angeordnet, dass die vorderseitige Schalungsplatte 51 und die rückseitige Schalungsplatte 52 jeweils im rechten Winkel zu den Abdeckplatten 20 stehen und bündig an den jeweiligen Stirnseiten der Abdeckplatten anliegen. Die beiden äußeren Abdeckplatten des Stapels übernehmen so jeweils die Funktion einer seitlichen Schalungsplatte.

Der durch die bodenseitige, vorderseitige und rückseitige Schalungsplatte sowie die außenliegenden Abdeckplatten gebildete Schalungsraum 55 kann nun mit einer aushärtbaren Vergussmasse ausgefüllt werden. Beispielsweise kann als Vergussmasse Beton oder dergleichen verwendet werden. Mit der Vergussmasse wird so der gesamte zwischen jeweils zwei Abdeckplatten gebildete Hohlraum 30 vollständig ausgegossen.

Nachdem die Vergussmasse weitestgehend ausgehärtet ist, kann der gesamte Stapel aus der Schalung entnommen werden und die fertigen lichtdurchlässigen Verbundkörper von den Abdeckplatten gelöst werden.

Um ein einwandfreies und problemloses Lösen der Abdeckplatten von der Oberfläche des Verbundkörpers zu gewährleisten, können die Abdeckplatten vor dem Ausgießen des Schalungsraumes 55 mit einem Trennmittel vorbehandelt werden.

Nach dem Ablösen der Abdeckplatten von den lichtdurchlässigen Verbundkörpern stehen noch die Zapfen 13 der Lichtleitsegmente über, welche in die Aussparungen 23 der Abdeckplatten eingegriffen haben. Diese überstehenden Zapfen können von dem Verbundkörper entfernt werden, etwa durch Abbrechen, durch Abfräsen oder durch Abschneiden mit einer heißen Klinge.

Bei dem in Fig. 3 gezeigten Beispiel werden vier lichtdurchlässige Verbundkörper mit jeweils drei Lichtleitkörpern gleichzeitig hergestellt. Zusätzlich zum Vorteil, dass mehrere lichtdurchlässige Verbundkörper gleichzeitig hergestellt werden können, hat dieses Verfahren auch den Vorteil, dass die Oberflächen der lichtdurchlässigen Verbundkörper weder geschliffen noch poliert werden müssen. Es müssen lediglich die überstehenden Zapfen entfernt werden, wie vorstehend beschrieben. Mit dem beschriebenen Verfahren können auf besonders einfache und kostengünstige Weise lichtdurchlässige Verbundkörper hergestellt werden.

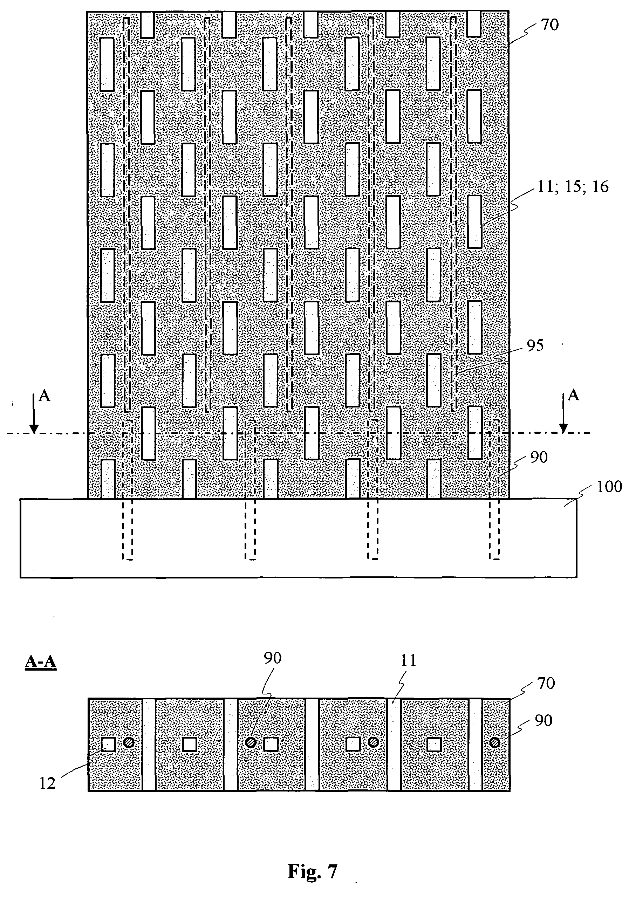

Um die Druck- und Biegezugfestigkeit des lichtdurchlässigen Verbundkörpers zu erhöhen, kann bei dem vorstehend beschriebenen Herstellungsverfahren vorgesehen sein, dass vor dem Ausgießen des Schalungsraumes mit einer aushärtbaren Vergussmasse in dem Hohlraum 30 zwischen den Abdeckplatten eine Armierung angeordnet wird, wie es mit Bezug auf Fig. 7 näher beschrieben wird. Wie bereits erwähnt, ist ein abschließendes Abschleifen bzw. Polieren des erfindungsgemäßen lichtdurchlässigen Verbundkörpers nicht mehr notwendig. Dennoch kann die Oberfläche zusätzlich poliert werden, um beispielsweise eine besonders glatte Oberfläche zu erreichen.

Ferner ist der erfindungsgemäße Verbundkörper, insbesondere wenn Armierungen in dem Verbundkörper vorgesehen sind, als tragfähiges, selbst tragendes Bauelement ausgebildet und kann so beispielsweise als Fassadenelement eines Gebäudes eingesetzt werden.

Ein weiterer wesentlicher Vorteil des erfindungsgemäßen Verfahrens zur Herstellung eines lichtdurchlässigen Verbundkörpers liegt darin, dass der Verbundkörper nicht aus einem Block gesägt werden muss, da durch das Verfahren bereits fertige Verbundkörper in vordefinierter Länge, Breite und Tiefe hergestellt werden.

**Fig.** 4 zeigt eine lichtleitende Platte 60, aus welcher eine Anzahl von Lichtleitkörpern 10 herstellbar ist. Die lichtleitende bzw. lichtdurchlässige Platte 60 kann aus Polymethylmethacrylat (PMMA), Glas oder ein anderes lichtdurchlässiges Material bestehen.

Bei dem in Fig. 4 gezeigten Beispiel werden aus der lichtdurchlässigen Platte 60 Lichtleitkörper 10 erzeugt, deren Profil eine punktsymmetrische Form aufweist. Ein punktsymmetrisches Profil der Lichtleitkörper 10 hat den Vorteil, dass eine Anzahl von Lichtleitkörper aus der lichtleitenden Platte 60 hergestellt werden können, bei gleichzeitig minimalem Verschnitt. Wie aus Fig. 4 ersichtlich, fällt lediglich an der oberen Kante und an der unteren Kante der lichtleitenden Platte Verschnitt an.

Die Lichtleitkörper 10 können etwa in einem Laserschnittverfahren aus der lichtleitenden Platte 60 herausgelasert werden. In Abhängigkeit von dem Material der lichtleitenden Platte 60 können auch andere geeignete Schnittverfahren eingesetzt werden.

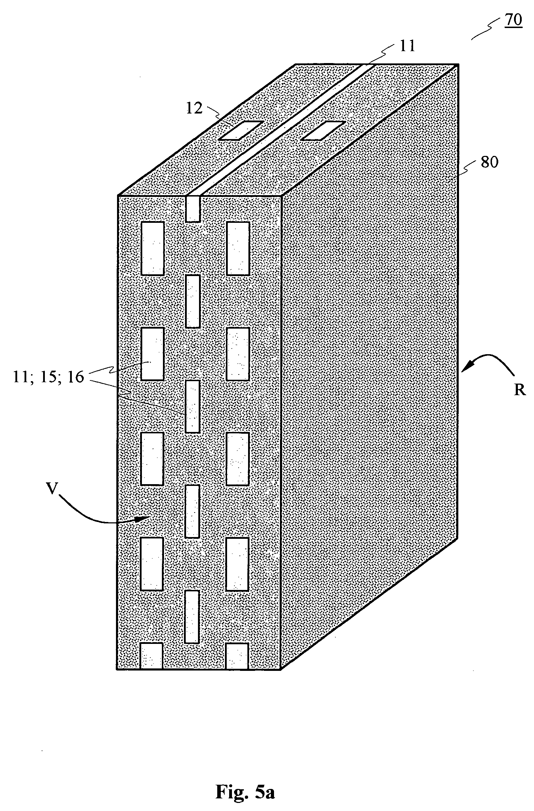

**Fig. 5a** zeigt einen erfindungsgemäßen lichtdurchlässigen Verbundkörper 70 in einer perspektivischen Ansicht von vorne.

Die Vorderseite V und die Rückseite R des Verbundkörpers 70 sind jene Seiten, an welchen bei der Herstellung des Verbundkörpers die Abdeckplatten 20 angeordnet waren. Erkennbar sind an der Vorderseite V die Lichtleitsegmente 11 bzw. die Lichteintritts-/Austrittsflächen 15, 16, welche bei der Herstellung des Verbundkörpers 70 formbündig an der Abdeckplatte aufgelegen sind.

Bei dem in Fig. 5a gezeigten Verbundkörper sind in der Vergussmasse 80 drei Lichtleitkörper 10 angeordnet, wobei die beiden äußeren Lichtleitkörper eine größere Dicke bzw. Tiefe D aufweisen als der mittlere Lichtleitkörper. An der Oberseite des Verbundkörpers 70 sind noch die Verbindungselemente 12 der beiden äußeren Lichtleitkörper sichtbar. Ferner ist an der Oberseite des Verbundkörpers 70 auch das sich von der Vorderseite V bis an die Rückseite R erstreckende oberste Lichtleitsegment 11 des mittleren Lichtleitkörpers 12 sichtbar. Der Verbundkörper 70 kann aber auch so hergestellt werden, dass weder die Verbindungssegmente 12 noch das oberste Lichtleitsegment 11 an der Oberseite des Verbundkörpers sichtbar sind.

**Fig. 5b** zeigt einen erfindungsgemäßen lichtdurchlässigen Verbundkörper in einer Ansicht von vorne. Bei dem hier gezeigten Verbundkörper sind die Lichtleitkörper bei der Herstellung des Verbundkörpers geschwungen zwischen den Abdeckplatten 20 angeordnet worden. Die geschwungene Anordnung der Lichtleitkörper ist in Fig. 5b durch die jeweilige Längsachse LA verdeutlicht worden. Damit können Verbundkörper hergestellt werden, welche eine wellenartige Textur an der Vorderseite und an der Rückseite aufweisen. Wie in dem Beispiel nach Fig. 5a können auch hier die Lichtleitkörper 10 unterschiedliche Breiten bzw. Dicken aufweisen.

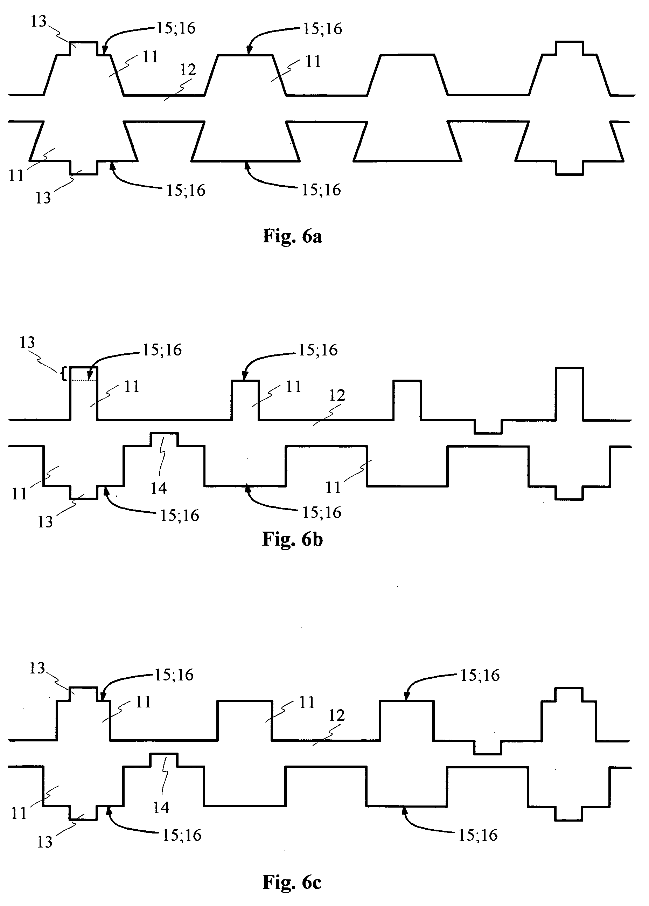

Fig. 6a bis Fig. 6f zeigen unterschiedliche Ausgestaltungen eines erfindungsgemäßen Lichtleitkörpers, welche zur Herstellung eines erfindungsgemäßen lichtdurchlässigen Verbundkörpers geeignet sind.

Allen Ausführungsformen nach Fig. 6a bis Fig. 6f ist gemein, dass einige der Lichtleitsegmente 11 an der Lichteintrittsfläche 15 bzw. an der Lichtaustrittsfläche 16 jeweils einen Zapfen 13 aufweisen, welcher nach dem Abnehmen der Abdeckplatten entfernt wird.

**Fig. 6a** zeigt einen Lichtleitkörper 10, bei dem die Lichtleitsegmente 11 im Wesentlichen die Form eines gleichschenkligen Trapezes aufweisen. Mit diesem Lichtleitkörper können lichtdurchlässige Verbundkörper mit dem zuvor beschriebenen Verfahren hergestellt werden, bei dem die Lichteintrittsflächen an der Vorderseite des Verbundkörpers größer sind als Lichtaustrittsflächen an der Rückseite des Verbundkörpers.

Bei dem Lichtleitkörper 10 nach **Fig. 6b** sind die Lichtleitsegmente 11 so ausgestaltet, dass die Lichtleitsegmente auf der einen Seite der Verbindungssegmente breiter sind als die Lichtleitsegmente auf der anderen Seite der Verbindüngssegmente. Auch damit kann ein lichtdurchlässiger Verbundkörper hergestellt werden, bei dem die Lichteintrittsflächen auf der Vorderseite größer sind als die Lichtaustrittsflächen auf der Rückseite. Die Besonderheit bei dem in Fig. 6b gezeigten Lichtleitkörper ist, dass die Zapfen 13 an den schmaleren Lichtleitsegmenten im Wesentlichen gleich breit sind wie die Lichtleitsegmente selbst.

Der Lichtleitkörper 10 nach **Fig. 6c** entspricht im Wesentlichen dem Lichtleitkörper nach Fig. 6b, mit dem Unterschied, dass die schmaleren Lichtleitsegmente 11 breiter sind als die Zapfen an den schmaleren Lichtleitsegmenten. Dies hat gegenüber der Ausführungsform nach Fig. 6b den Vorteil, dass die Abdeckplatte auf den an den Zapfen 13 überstehenden Lichteintrittsflächen bzw. Lichtaustrittsflächen aufliegen kann.

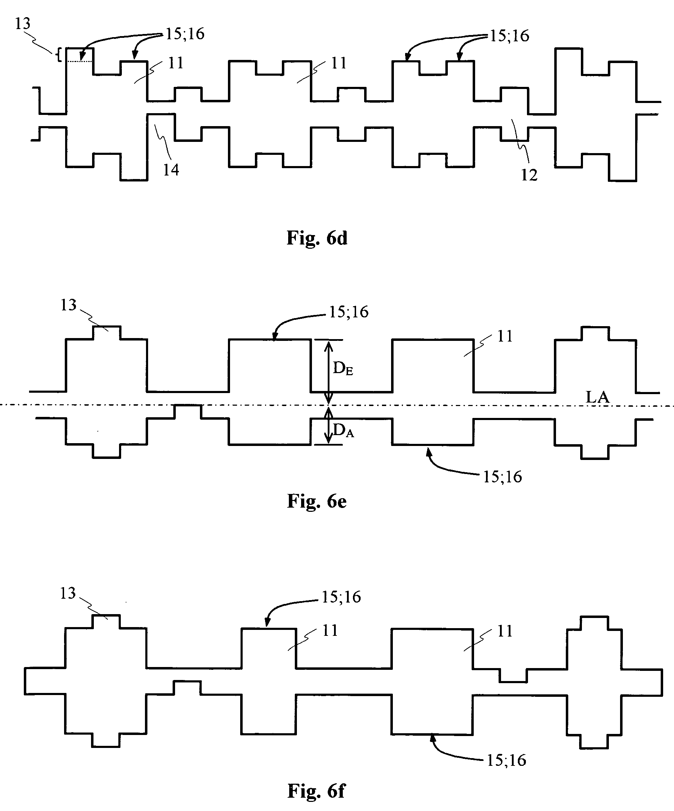

**Fig. 6d** zeigt einen Lichtleitkörper, welcher wie der Lichtleitkörper nach Fig. 1 ein im Wesentlichen punktsymmetrisches Profil aufweist. Der Lichtleitkörper 10 weist hier eine Anzahl von Lichtleitsegmenten auf, an welchen jeweils zwei Lichteintrittsflächen und zwei Lichtaustrittsflächen ausgebildet sind. An jeweils einer Lichteintrittsfläche bzw. Lichtaustrittsfläche einiger Lichtleitsegmente 11 ist ein Zapfen 13 ausgebildet, welcher nach dem Abnehmen der Abdeckplatten von dem Verbundkörper entfernt werden kann. Aufgrund des punktsymmetrischen Profils des Lichtleitkörpers eignet sich dieser insbesondere zur verschnittarmen Herstellung aus einer lichtleitenden Platte, wie mit Bezug auf Fig. 4 erläutert.

**Fig. 6e** zeigt einen erfindungsgemäßen Lichtleitkörper 10, bei dem die Lichtleitsegmente 11 eine im Wesentlichen rechteckigen Form aufweisen, wobei an einigen der Lichtleitsegmente an der Lichteintrittsfläche bzw. an der Lichtaustrittsfläche ein Zapfen 13 angeordnet ist. Im Unterschied zu den vorstehend gezeigten Lichtleitkörpern ist der Abstand DE der Lichteintrittsflächen zur Längsachse LA des Lichtleitkörpers größer als der Abstand DA der Lichtaustrittsflächen zu der Längsachse.

Der Lichtleitkörper nach **Fig. 6f** zeichnet sich dadurch aus, dass die Lichtleitsegmente eine im Wesentlichen rechteckige Form aufweisen, wobei einige der Lichtleitsegmente breiter ausgestaltet sind als die anderen Lichtleitsegmente. Damit können lichtdurchlässige Verbundkörper hergestellt werden, bei denen an der Vorderseite und an der Rückseite Lichteintrittsflächen bzw. Lichtaustrittsflächen unterschiedlicher Größe ausgebildet werden.

**Fig. 7** zeigt einen erfindungsgemäßen Verbundkörper 70, welcher auf einem Untergrund, etwa einer Bodenplatte oder einer Rohbetondecke hergestellt worden ist. Gezeigt ist hier eine Ansicht von vorne sowie eine Schnittansicht entlang der Schnittachse A-A.

Von dem Untergrund 100 (Bodenplatte, Rohbetondecke oder sonstiger stabiler Untergrund) ragen Verbindungsstäbe 90 im Wesentlichen senkrecht zum Untergrund 100 hervor. Die Verbindungsstäbe 90 können Steckeisen sein, welche bei der Herstellung des Untergrundes 100 in den Untergrund eingebracht worden sind. Die Verbindungsstäbe 90 sind im Wesentlichen dazu vorgesehen, den Verbundkörper 70 fest mit dem Untergrund 100 zu verbinden.

Hierzu wird auf dem Untergrund 100 eine unten offene Schalung hergestellt, sodass die Verbindungsstäbe 90 in den Schalungsraum 55 (vgl. Fig. 3) hineinragen. Für die Herstellung der Schalung auf dem Untergrund 100 sind im Wesentlichen nur zwei Schalungsplatten notwendig, weil die beiden anderen Schalungsplatten der Schalung durch die Abdeckplatten 20 gebildet werden. Zwischen den beiden Schalungsplatten werden zwei Abdeckplatten 20 und die zwischen den Abdeckplatten 20 angeordneten Lichtleitkörpern angeordnet, wie mit Bezug auf Fig. 3 erläutert. Die Anordnung zwischen den beiden Schalungsplatten erfolgt derart, dass die Verbindungsstäbe 90 in den Hohlraum 30 zwischen den beiden Abdeckplatten des herzustellenden Lichtleitkörpers hineinragen. Nachdem die Abdeckplatten und die zwischen den Abdeckplatten angeordneten Lichtleitkörper zwischen den beiden Schalungsplatten angeordnet worden sind, kann der Schalungsraum 55 bzw. der Hohlraum zwischen den beiden Abdeckplatten mit einer aushärtenden Vergussmasse, etwa Beton, aufgefüllt werden.

Gemäß einer Ausführungsform ist es vorgesehen, dass zunächst nur soviel Vergussmasse in den Schalungsraum 55 bzw. Hohlraum 30 gegeben wird, dass die Verbindungsstäbe 90 im Wesentlichen vollständig in der Vergussmasse liegen. Anschließend können Armierungsstäbe 95 in den Hohlraum zwischen den Abdeckplatten eingebracht und in die bereits in dem Hohlraum vorhandene Vergussmasse hineingesteckt werden. Anschließend kann der Hohlraum 30 bzw. der Schalungsraum 55 vollständig mit der aushärtenden Vergussmasse aufgefüllt werden.

In einer anderen Ausführungsform ist vorgesehen, dass die Armierungsstäbe 95 zwischen den Abdeckplatten 20 angeordnet werden, bevor die Abdeckplatten mit den Lichtleitkörpern auf dem Untergrund 100 zwischen den beiden Schalungsplatten angeordnet werden. In diesem Fall kann der Hohlraum 30 bzw. der Schalungsraum 50 in einem einzigen Schritt vollständig mit der aushärtbaren Vergussmasse aufgefüllt werden.

Nach dem Aushärten der Vergussmasse werden die Abdeckplatten 20 und die Schalungsplatten entfernt. Die noch überstehenden Zapfen 13 werden, wie vorstehend beschrieben, entfernt.

In der Schnittansicht entlang der Schnittachse A-A sind die in die Vergussmasse 80 hineinragenden Verbindungsstäbe 90 sichtbar. Ferner sind die sich von der Vorderseite bis zur Rückseite des Verbundkörpers erstreckenden Lichtleitsegmente 11 sowie der Verbindungselemente 12 sichtbar.

Damit wird auch ein besonderer Vorteil des erfindungsgemäßen Verfahrens zur Herstellung eines lichtdurchlässigen Verbundkörpers sichtbar: Mit dem Lichtleitkörper können unter Anwendung des erfindungsgemäßen Verfahrens lichtdurchlässige Verbundkörper, insbesondere Fassadenelemente vor Ort auf der Baustelle auf besonders einfache Art und Weise hergestellt werden. Es muss lediglich darauf geachtet werden, dass die Lichtleitkörper zwischen den Abdeckplatten einigermaßen stabil angeordnet werden, um ein Verrutschen der Lichtleitkörper während des Auffüllens des Hohlraumes bzw. des Schalungsraumes mit der Vergussmasse weitestgehend zu verhindern. Gleichzeitig wird der herzustellende Verbundkörper über die Verbindungsstäbe fest mit dem Untergrund 100 verbunden, sodass keinerlei weitere Maßnahmen für eine feste Verbindung des Verbundkörpers mit dem Untergrund vorgesehen werden müssen.

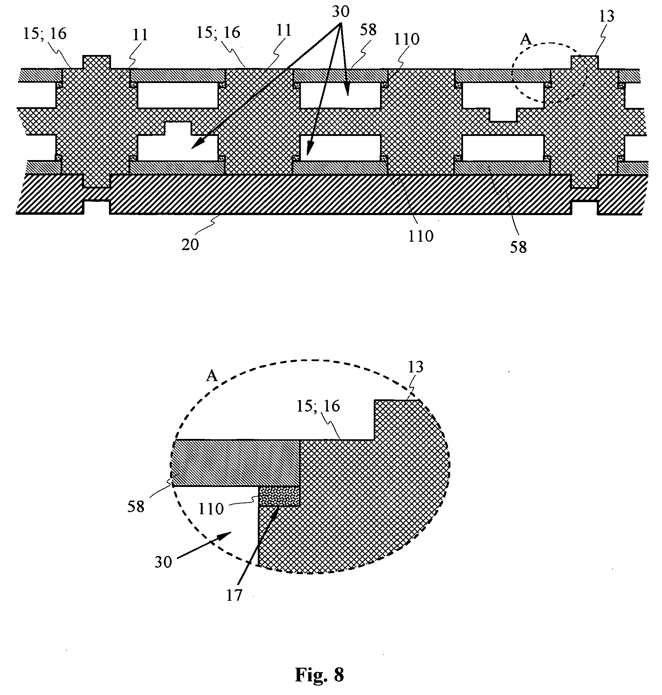

**Fig. 8** zeigt eine alternative Ausgestaltung eines erfindungsgemäßen Verbundkörpers. Der hier gezeigte Verbundkörper umfasst einen Lichtleitkörper 10, wie er beispielsweise mit Bezug auf Fig. 1 oder Fig. 6a bis 6f gezeigt ist.

Im Unterschied zu dem mit Bezug auf Fig. 5a bzw. Fig. 5b gezeigten erfindungsgemäßen Verbundkörper, welcher nach Fertigstellung des Verbundkörpers keine Abdeckplatte aufweist, weist der in Fig. 8 gezeigte erfindungsgemäße Verbundkörper zumindest an der Vorderseite oder an der Rückseite eine Platte 58 auf, welche als verlorene Abdeckplatte ausgestaltet sein kann. Die Platte 58 weist Aussparungen bzw. Durchbrüche auf, welche im Wesentlichen die Form bzw. das Profil der Lichteintrittsflächen bzw. Lichtaustrittsflächen 15, 16 aufweisen.

Die Platte 58 wird bei der Herstellung des Verbundkörpers auf die Lichtleitsegmente 11 aufgesteckt, sodass eine im Wesentlichen formbündige bzw. formschlüssige Verbindung zwischen der Platte 58 und den Lichtleitsegmenten 11 besteht. Die so aufgesteckte Platte 58 ist vorgesehen, nach dem Ausgießen der Hohlräume 30 permanent an dem Verbundkörper zu verbleiben. Daher kann es vorteilhaft sein, an der den Hohlräumen zugewandten Seite der Platte 58 beispielsweise Widerhakenelemente vorzusehen, um nach dem Aushärten der Vergussmasse ein selbständiges Lösen der Platte 58 weitestgehend zu vermeiden. Eine feste Verbindung zwischen der Platte 58 und den Lichtleitsegmenten 11 kann alternativ auch hergestellt werden, indem an den Verbindungsstellen zwischen der Platte 58 und den Lichtleitsegmenten 11 ein Klebemittel eingebracht wird.

Zum Zwecke der Herstellung kann es auch vorteilhaft sein, nach dem Aufbringen der Platte 58 auf die Zapfen 13 zusätzlich auch eine Abdeckplatte 20 anzuordnen, wie mit Bezug auf Fig. 2 oder Fig. 3 erläutert. Damit kann verhindert werden, dass beim Ausgießen der Hohlräume 30 die Platte 58 nach außen gedrückt wird.

Die Platte 58 kann etwa ein Metall, beispielsweise Aluminium, Holz, Kunststoff oder dergleichen aufweisen.

Nach dem Herstellen des Verbundkörpers mit einer Platte 58 werden die überstehenden Zapfen 13 der Lichtleitsegmente 11 entfernt, wie ebenfalls vorstehend beschrieben.

Selbstverständlich kann auch an der Rückseite des Verbundkörpers eine Platte 58 angeordnet werden, welche ebenfalls als verlorene Abdeckplatte vorgesehen ist, d.h. nach der Herstellung des Verbundkörpers an dem Verbundkörper verbleibt.

Es kann vorteilhaft sein, randseitig der Lichteintrittsflächen bzw. Lichtaustrittsflächen 15, 16 eine Schulter bzw. Ausklinkung vorzusehen, sodass die Platte 58 auf den Schultern bzw. Ausklinkungen aufliegen kann. Ferner kann im Bereich der Schulter bzw. Ausklinkung eine Dichtung bzw. Isolierung 110 vorgesehen sein. Vorteilhaft ist es, für die Isolierung 110 ein Material zu verwenden, welches eine weitestgehend luftdichte und/oder temperaturdichte Isolierung ermöglicht.

Werden an beiden Seiten des Verbundkörpers Platten 58 mit entsprechenden Isolierungen 110 angeordnet, kann anstelle einer aushärtbaren Vergussmasse auch ein Gas oder dergleichen in die Hohlräume eingebracht werden. Es ist aber auch möglich, einen Schaumstoff, etwa ein Isolierschaum, in die Hohlräume 30 einzubringen. In einer alternativen Ausführungsform und bei entsprechender Abdichtung durch die Isolierung 110 kann in den Hohlräumen 30 auch ein Vakuum ausgebildet werden.

Durch die Verwendung der Platten 58 sowohl an der Vorderseite als auch an der Rückseite können sowohl besonders ästhetisch wirkende als auch besonders witterungsbeständige lichtleitende Verbundkörper hergestellt werden, welche beispielsweise als Fassadenelemente eingesetzt werden können. Bei der Verwendung als Fassadenelement kann wetterseitig eine Platte 58 aus Metall oder Kunststoff vorgesehen sein, raumseitig kann etwa eine Platte 58 aus Holz vorgesehen sein.

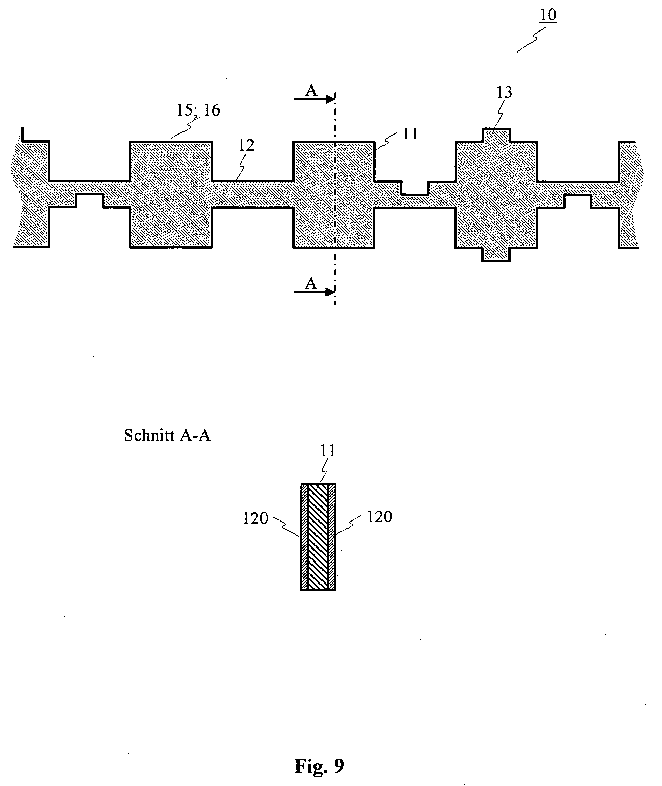

Neben den vorstehend gezeigten Lichtleitkörpern können auch die in Fig. 9 gezeigten Lichtleitkörper 10 für die Herstellung eines lichtdurchlässigen Verbundkörpers vorgesehen werden.

**Fig. 9** zeigt einen erfindungsgemäßen Lichtleitkörper 10, dessen Profil im Wesentlichen dem Profil des Lichtleitkörpers in Fig. 1 entspricht. Gezeigt ist hier eine Ansicht von vorne sowie ein Schnittansicht entlang der Schnittachse A-A.

An dem Lichtkörper 10 können an der Vorderseite und/oder an der Rückseite photovoltaische Zellen 120 angeordnet sein, um aus dem einfallenden Licht Strom zu erzeugen. Die photovoltaische Zelle 120 ist vorzugsweise als Dünnschichtzelle ausgestaltet, welche auf die Oberfläche des Lichtkörpers 10 aufgedampft werden kann. Dadurch wird eine besonders einfache Herstellung der Lichtkörper 10 mit integrierten Solarzellen ermöglicht.

In einer konkreten Ausgestaltung können auch lediglich die Lichtleitsegmente 11 des Lichtleitkörpers 10 mit photovoltaische Zellen 120 versehen werden. Ferner können auch an den Zapfen 13 photovoltaische Zellen 120 angeordnet werden, wobei dann allerdings die Abdeckplatten 20 so angebracht werden sollten, dass photovoltaische Zellen 120 nicht beschädigt werden.

Die photovoltaische Zellen 120 können auf jeden einzelnen Lichtleitkörper 10 separat aufgebracht werden.

Bei dem mit Bezug auf Fig. 4 erläuterten Verfahren zur Herstellung der Lichtleitkörper 10 kann es auch vorteilhaft sein, die photovoltaische Zellen 120 auf die Platte 60 aufzubringen, bevor die Lichtleitkörper 10 aus der Platte 60 herausgeschnitten werden. Dies hat den Vorteil, dass eine relativ große Fläche besonders einfach mit photovoltaische Zellen 120 versehen werden kann, insbesondere wenn sie als Dünnschichtzellen auf die Oberfläche des Lichtkörpers 10 aufgedampft werden.

### Bezugszeichen:

- 10: Lichtleitkörper
- 11: Lichtleitsegmente
- 12: Verbindungssegmente
- 12a: lösbares Verbindungssegment
- 13: Zapfen am Lichtleitsegment
- 14: Aussparung am Verbindungssegment
- 15: Lichteintrittsfläche des Lichtleitsegments
- 16: Lichtaustrittsfläche des Lichtleitsegments
- 17: Schulter bzw. Ausklinkung
- 20: Abdeckplatte
- 23: Aussparungen in der Abdeckplatte, welche mit den Zapfen der Lichtleitsegmente korrespondieren
- 30: Hohlraum zwischen Abdeckplatte und Lichtleitkörper
- 40: formbündige Verbindung
- 51: Schalungsplatte (vorderseitig)
- 52: Schalungsplatte (rückseitig)
- 53: Schalungsplatte (bodenseitig)
- 55: Schalungsraum
- 58: Platte (verlorene Abdeckplatte)
- 60: Licht leitende Platte
- 70: Verbundkörper mit einer Anzahl von Lichtleitkörpern
- 80: Vergussmasse (z.B. Beton)
- 90: Verbindungsstäbe (z.B. Steckeisen) zum Befestigen des Verbundkörpers auf einem Untergrund (z.B. Bodenplatte)
- 95: Armierung
- 100: Untergrund, z.B. Bodenplatte
- 110: Dichtung / Isolierung
- 120: Photovoltaische Zellen
- D_{E}: Abstand der Eintrittsfläche zur Längsachse des Lichtleitkörpers
- D_{A}: Abstand der Austrittsfläche zur Längsachse des Lichtleitkörpers
- D: Tiefe bzw. Dicke des Lichtleitkörpers
- LA: Längsachse des Lichtleitkörpers bzw. der Verbindungssegmente
- R: Rückseite des Verbundkörpers
- V: Vorderseite des Verbundkörpers

## Patentansprüche

1. Verfahren zur Herstellung eines lichtdurchlässigen Verbundkörpers (70), wobei der Verbundkörper zumindest einen Lichtleitkörper (10) umfasst, wobei die Lichtleitkörper (10) jeweils eine Anzahl von Lichtleitsegmenten (11) aufweisen und den Verbundkörper (70) lichtdurchlässig ausbilden, wobei jedes der Lichtleitsegmente (11) eine Lichteintrittsfläche (15) und eine Lichtaustrittsfläche (16) aufweist, wobei an zumindest einigen der Lichteintrittsflächen (15) und Lichtaustrittsflächen (16) überstehende Zapfen (13) vorgesehen sind, wobei die Lichteintrittsflächen (15) und die Lichtaustrittsflächen (16) an den Zapfen (13) überstehen, und wobei das Verfahren zumindest folgende Schritte umfasst:
- Anordnen zumindest eines Lichtleitkörpers (10) zwischen zumindest einer ersten Abdeckplatte und einer zweiten Abdeckplatte, wobei die Abdeckplatten (20; 58) zusammen mit den Lichtleitkörpern (10) ein Sandwichelement bilden, wobei die Abdeckplatten (20; 58) zumindest an der dem Lichtleitkörper (10) zugewandten Seite Aussparungen oder Durchbrüche (23) aufweisen, in die die Zapfen (13) eingreifen,
wobei
die Lichtleitsegmente (11) zumindest teilweise in die Aussparungen oder Durchbrüche (23) eingreifen, und die Abdeckplatten (20; 58) auf Schultern (17) aufliegen, welche randseitig an den Lichtleitsegmenten (11) ausgebildet sind, **dadurch gekennzeichnet, dass**
das Verfahren zusätzlich ein Auffüllen eines zwischen den Abdeckplatten (20; 58) ausgebildeten Hohlraumes (30) mit einem Füllmaterial umfasst, wobei das Füllmaterial eine aushärtbare Vergussmasse (80) umfasst, wobei nach dem Auffüllen mit dem Füllmaterial die Abdeckplatten (20) entfernt werden, und wobei nach dem Entfernen der Abdeckplatten (20) die Zapfen (13) der Lichtleitsegmente von dem Verbundkörper (70) entfernt werden.

2. Verfahren nach Anspruch 1, wobei das Sandwichelement in einem Schalungsraum (55) einer zumindest oben offenen Schalung angeordnet wird, und wobei der Schalungsraum (55) mit dem Füllmaterial aufgefüllt wird.

3. Verfahren nach einem der Ansprüche 1 bis 2, wobei zwischen den Abdeckplatten (20; 58) des Sandwichelements, und vorzugsweise zwischen den Lichtleitkörpern (10), eine Armierung (95) angeordnet wird.

4. Verfahren nach einem der Ansprüche 2 bis 3, wobei die Schalung, welche unten offen ist, auf einem Untergrund (100) angeordnet wird, wobei das Sandwichelement (10; 20) derart in dem Schalungsraum (55) der Schalung angeordnet wird, dass an dem Untergrund (100) hervorstehende Verbindungsstäbe (90) zwischen die Abdeckplatten (20; 58) des Sandwichelements hineinragen.

## Claims

1. A method of fabricating a translucent composite body (70), said composite body comprising at least one light-conducting body (10), said light-conducting bodies (10) having each a number of light-conducting segments (11) and thus conveying translucency to the the composite body (70), each of said light-conducting segments (11) having a light ingress surface (15) and a light egress surface (16), at least some of said light ingress surfaces (15) and said light egress surfaces (16) having projecting tenons (13) provided thereon, said light-ingress surfaces (15) and said light egress surfaces (16) forming projections at said tenons (13), said method comprising at least the following steps:
- disposing at least one light-conducting body (10) between at least one first cover plate and one second cover plate, the cover plates (20; 58) cooperating with said light-conducting bodies (10) to form a sandwich member, said cover plates (20; 58) having recesses or apertures (23) which are arranged at least on their sides facing the light-conducting body (10) and with which the tenons (13) engage,
wherein
the light-conducting segments (11) engage at least partially with the recesses or apertures (23) and the cover plates (20; 58) rest on shoulders (17) formed on the edge of the light-conducting segments (11), **characterised in that**
the method additionally comprises filling a cavity (30) formed between the cover plates (20, 58) with a filler material,
said filler material comprising a curable casting compound (80), said cover plates (20) being removed once the filling with said filler material has been accomplished, and said tenons (13) of the light-conducting segments being removed from the composite body (70) once the cover plates (20) have been removed.

2. The method as claimed in claim 1, wherein the sandwich member is disposed in a formwork space (55) of a shuttering formwork that is open at least on the top side, and wherein the formwork space (55) is filled with said filler material.

3. The method as claimed in any one of claims 1 to 2, wherein a reinforcement (95) is disposed between the cover plates (20; 58) of the sandwich member and preferably between the light-conducting bodies (10).

4. The method as claimed in any one of claims 2 to 3, wherein the shuttering formwork, which is open on the bottom side, is arranged on a support (100), said sandwich member (10; 20) being disposed in such a manner in the formwork space (55) of the shuttering formwork that connecting rods (90) projecting from the support (100) protrude into the sandwich member between the cover plates (20; 58) thereof.

## Revendications

1. Procédé destiné à fabriquer un corps composite (70) perméable à la lumière, le corps composite comprenant au moins un corps conducteur de lumière (10), les corps conducteurs de lumière (10) présentant respectivement un nombre donné de segments conducteurs de lumière (11) et formant le corps composite (70) de manière à ce qu'il soit perméable à la lumière, chacun des segments conducteurs de lumière (11) présentant une surface d'entrée de lumière (15) et une surface de sortie de lumière (16), des tenons (13) faisant saillie étant prévus au moins sur quelques-unes des surfaces d'entrée de lumière (15) et des surfaces de sortie de lumière (16), les surfaces d'entrée de lumière (15) et les surfaces de sortie de lumière (16) faisant saillie au niveau des tenons (13), et ledit procédé comprenant au moins les étapes suivantes :
- la disposition d'au moins un corps conducteur de lumière (10) entre au moins une première plaque de recouvrement et une deuxième plaque de recouvrement, les plaques de recouvrement (20; 58) formant ensemble avec les corps conducteurs de lumière (10) un élément sandwich, les plaques de recouvrement (20; 58) présentant au moins sur le côté tourné vers le corps conducteur de lumière (10) des évidements dans lesquels ou des ouvertures (23) dans lesquelles pénètrent les tenons (13),
les segments conducteurs de lumière (11) pénétrant au moins partiellement dans les évidements ou ouvertures (23), et les plaques de recouvrement (20; 58) reposant sur des épaulements (17) qui sont formés sur les bords des segments conducteurs de lumière (11), **caractérisé en ce que**
ledit procédé comprend en outre un remplissage d'un espace vide (30) formé entre les plaques de recouvrement (20; 58) avec un matériau de remplissage,
le matériau de remplissage comprenant une masse de scellement (80) durcissable, les plaques de recouvrement (20) étant retirées une fois le remplissage effectué avec le matériau de remplissage, et les tenons (13) des segments conducteurs de lumière étant retirés du corps composite (70) une fois les plaques de recouvrement (20) retirées.

2. Procédé selon la revendication 1, l'élément sandwich étant disposé dans un espace de coffrage (55) d'un coffrage au moins ouvert vers le haut, et l'espace de coffrage (55) étant rempli avec le matériau de remplissage.

3. Procédé selon l'une quelconque des revendications 1 à 2, une armature (95) étant disposée entre les plaques de recouvrement (20; 58) de l'élément sandwich, et de préférence entre les corps conducteurs de lumière (10).

4. Procédé selon l'une quelconque des revendications 2 à 3, le coffrage, qui est ouvert vers le bas, étant disposé sur un fond (100), l'élément sandwich (10; 20) étant disposé dans l'espace de coffrage , (55) dudit coffrage de sorte que des tiges de raccordement (90) faisant saillie sur le fond (100) pénètrent entre les plaques de recouvrement (20; 58) de l'élément sandwich.
